# EUROPEAN PATENT APPLICATION

(11) **EP 4 063 197 A1**
(43) Date of publication of application: **28.09.2022**
(21) Application number: 20890174.4
(22) Date of filing: 19.11.2020
(51) Int. Cl.: B60R 13/00, G01J 1/02, G02B 1/111, G02B 5/22, G01S 7/481

(54) **RESIN PANEL AND INFRARED SENSOR**

(30) Priority: 19.11.2019 JP 2019209127
(71) Applicant: Dai Nippon Printing Co., Ltd., Tokyo 162-8001 (JP)
(72) Inventor: KOYAMA, Keisuke, Tokyo 162-8001 (JP); AKIYAMA, Kentaro, Tokyo 162-8001 (JP); SASOU, Naoki, Tokyo 162-8001 (JP); TADA, Masahiro, Tokyo 162-8001 (JP); NISHIDA, Tomonori, Tokyo 162-8001 (JP)
(74) Representative: Müller-Boré & Partner Patentanwälte PartG mbB
(86) International application number: PCT/JP2020/043155
(87) International publication number: WO 2021/100798

(57) **Abstract**

Provided is a resin panel enabling an infrared sensor to fully function when the resin panel is applied as a protective cover to the infrared sensor. The resin panel comprises at least a core layer and has a light transmittance at a wavelength of 905 nm of 85% or more and a visible light transmittance of 20% or less.

## Description

### Technical Field

The present invention relates to a resin panel and an infrared sensor.

### Background Art

Recently, technological development of optical sensors such as LiDAR has been advancing in the field of, for example, automatic driving of automobiles. In such an optical sensor, there is a case where a protective cover is disposed in front of a light emitting element and a light receiving element.

The protection cover for optical sensors are formed, for example, to protect the light emitting element and the light receiving element from stepping stones, sunlight, rain and wind, etc. Therefore, it is preferable that the protective cover have excellent impact resistance and weather resistance. For example, PTL1 proposes that an optical element made of polycarbonate be disposed as a protective cover.

### Citation List

### Patent Literature

PTL1: JP 2019-32505 A (claim 1, paragraph [0042])

### Summary of Invention

### Technical Problem

Some light emitting elements of optical sensors emit light having a wavelength in the infrared region in order to suppress influence on human eyes. In particular, most of light emitting elements of optical sensors (mainly, LiDAR) mounted on automobiles emit light having a wavelength in the infrared region.

However, when the optical element made of polycarbonate disclosed in PTL1 was applied as a protective cover to an optical sensor (infrared sensor) that emits light having a wavelength in the infrared region, cases in which the infrared sensor do not fully function have frequently occurred. In particular, cases in which the infrared sensor does not fully function have tended to increase when a design layer was incorporated into said protective cover in order to enhance design elaboration.

An object of the present invention is to provide a resin panel enabling an infrared sensor to fully function when the resin panel is applied as a protective cover to the infrared sensor and to provide an infrared sensor comprising said resin panel.

### Solution to Problem

In order to achieve the above object, the present invention provides the following [1] and [2].
[1] A resin panel comprising at least a core layer, the resin panel having a light transmittance at a wavelength of 905 nm of 85% or more and a visible light transmittance of 20% or less.
[2] An infrared sensor comprising an infrared light emitting element, an infrared light receiving element, and a protective cover disposed in front of the infrared light emitting element and infrared light receiving element, wherein the protective cover is the resin panel according to the above [1].

### Advantageous Effects of Invention

When the resin panel of the present invention is applied as a protective cover to an infrared sensor, the resin panel of the present invention enables the infrared sensor to fully function. The infrared sensor of the present invention, which comprises said resin panel, can fully function.

### Brief Description of Drawings

[Fig. 1] Fig. 1 is a cross-sectional view showing one embodiment of a resin panel of the present invention.
[Fig. 2] Fig. 2 is a cross-sectional view showing another embodiment of the resin panel of the present invention.
[Fig. 3] Fig. 3 is a cross-sectional view showing yet another embodiment of the resin panel of the present invention.
[Fig. 4] Fig. 4 is a cross-sectional view showing still another embodiment of the resin panel of the present invention.
[Fig. 5] Fig. 5 is a cross-sectional view showing still another embodiment of the resin panel of the present invention.
[Fig. 6] Fig. 6 is a cross-sectional view showing still another embodiment of the resin panel of the present invention.

### Description of Embodiments

### [Resin panel]

A resin panel of the present invention is a resin panel comprising at least a core layer, the resin panel having a light transmittance at a wavelength of 905 nm of 85% or more and a visible light transmittance of 20% or less.

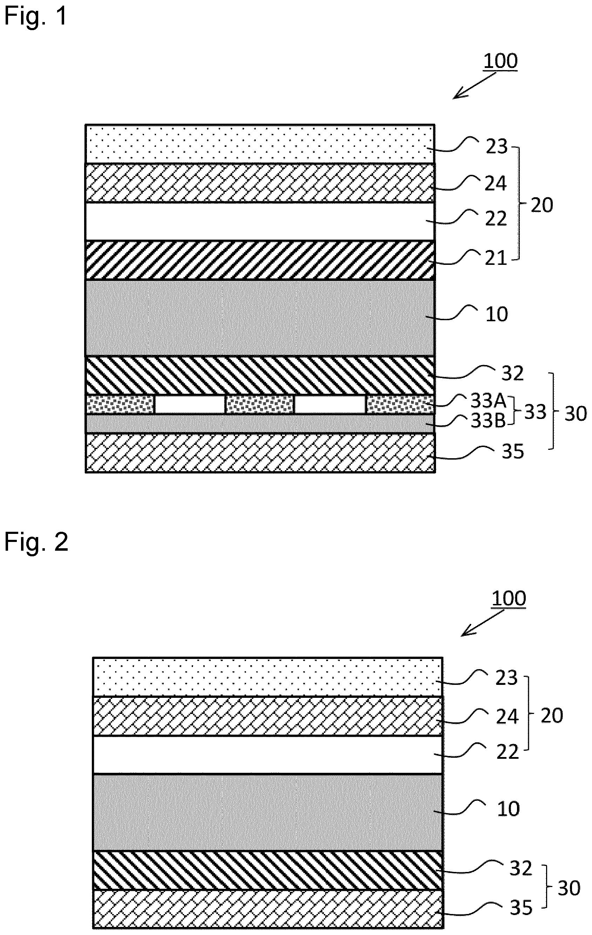

Figs. 1 to 6 are cross-sectional views each showing one embodiment of the resin panel of the present invention.

The resin panel (100) of each of Figs. 1 to 6 comprises a core layer (10).

The resin panel (100) of each of Figs. 1 to 6 comprises an inner layer (20) in addition to the core layer (10) and comprises an antireflection layer (23) and the like as the inner layer (20).

The resin panel (100) of each of Figs. 1 to 5 comprises an outer layer (30) in addition to the core layer (10) and comprises a hard coat layer B (35) and the like as the outer layer (30).

Herein, the "inner layer" means a layer located on the infrared light emitting element side and the infrared light receiving element side relative to the core layer as the basis when the resin panel is applied as a protective cover to an infrared sensor. Similarly, the "outer layer" herein means a layer located on the opposite side to the infrared light emitting element and infrared light receiving element relative to the core layer as the basis when the resin panel is applied as a protective cover to an infrared sensor.

### <Transmittance>

The resin panel of the present invention is required to have a light transmittance at a wavelength of 905 nm of 85% or more and a visible light transmittance of 20% or less. The above described numerical values must be satisfied regardless of whether the front or back of the resin panel is used as the light incident surface.

If the light transmittance at a wavelength of 905 nm is less than 85%, the detection function of infrared sensors emitting infrared light having a wavelength of 905 nm cannot be fully performed. If the visible light transmittance exceeds 20%, a malfunction due to visible light such as sunlight may occur so that the function of infrared sensors cannot be fully performed, even when the light transmittance at a wavelength of 905 nm is 85% or more. In addition, since the visible light transmittance is 20% or less, the infrared light emitting element and the infrared light receiving element disposed inside the infrared sensor can be easily made invisible.

The light transmittance at a wavelength of 905 nm of the resin panel is preferably 86% or more and more preferably 88% or more. The upper limit of the light transmittance at a wavelength of 905 nm of the resin panel is not particularly limited, but the light transmittance is usually 97% or less.

For increasing the light transmittance at a wavelength of 905 nm of the resin panel, it is preferable that the low-reflection layer described later be provided, and it is more preferable that the refractive index and thickness of the low-reflection layer be within the ranges described later.

Herein, the light transmittance at a wavelength of 905 nm of the resin panel and the visible light transmittance described later are each the average of found values at 20 points.

The visible light transmittance of the resin panel is preferably 15% or less, more preferably 13% or less, and still more preferably 11% or less.

Carbon black is usually used in order to decrease the visible light transmittance. However, carbon black absorbs light in the infrared region and thus decreases the light transmittance at a wavelength of 905 nm. Therefore, one or more compounds selected from the group consisting of an azomethineazo-based compound and a perylene-based compound described later are preferably used in order to decrease the visible light transmittance of the resin panel.

If the visible light transmittance is too low, it is difficult to achieve further effects, and on the other hand, the light transmittance at a wavelength of 905 nm may decrease. Therefore, the visible light transmittance of the resin panel is preferably 1% or more and more preferably 2% or more.

Herein, the "visible light transmittance" means the average value of spectral transmittances at wavelengths from 380 to 780 nm. The wavelength interval is set to 1 nm in the measurement.

### <Core layer>

The core layer preferably contains a resin or glass as a main component, and more preferably contains a resin as a main component in view of moldability.

The main component means a component that accounts for 50% by mass or more, preferably 70% by mass or more, and more preferably 90% by mass or more of the total solid content of the core layer.

When the core layer contains a resin, a thermoplastic resin is preferable in view of ease in injection molding such as insert molding and in-mold molding.

Examples of the thermoplastic resin include a single resin selected from the group consisting of a polystyrene-based resin, a polyolefin-based resin, an ABS resin, an AS resin, an AN resin, a polyphenyleneoxide-based resin, a polycarbonate-based resin, a polyacetal-based resin, an acrylic resin, a polyethylene terephthalate-based resin, a polybutylene terephthalate-based resin, a polysulfone-based resin, and a polyphenylenesulfide-based resin, and mixtures thereof. Among them, a polycarbonate-based resin and an acrylic resin are preferable, and a polycarbonate-based resin, which is excellent in impact resistance, is more preferable.

### - Azomethineazo-based compound and perylene-based compound -

The core layer preferably includes one or more compounds selected from the group consisting of an azomethineazo-based compound and a perylene-based compound. Azomethineazo-based compounds and perylene-based compounds are black pigments and have the property of transmitting light in the infrared region while absorbing light in the visible region. Therefore, when the core layer includes one or more compounds selected from the group consisting of an azomethineazo-based compound and a perylene-based compound, the light transmittance at a wavelength of 905 nm can be easily kept in a high transmittance range while decreasing the visible light transmittance of the resin panel.

The azomethineazo-based compound is an azo-based compound having an azomethine group. Examples of the azo-based compounds having an azomethine group include a compound having an azo group that has a structural unit represented by general formula (1) below within its molecule.

The azomethineazo-based compound can be produced by the procedures described in JP 63-91283 A and JP 62-32148 A, for example.

Examples of the azomethineazo-based compound also include a compound having a diazonium group, which is a compound obtained through reaction between tetrachlorophthalimide and aminoaniline. 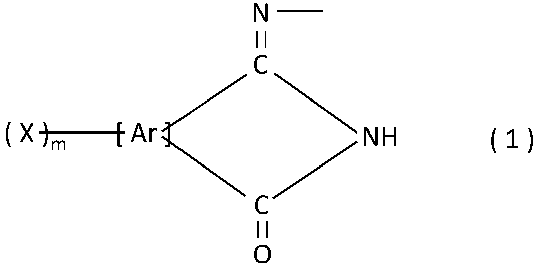 wherein, "Ar" is a residual group of an aromatic compound or heterocyclic compound, "X" is a hydrogen atom or a halogen atom, and "m" is an integer of 1 or more resulting from the substitution position of Ar. It is preferable that "m" be an integer of 1 to 4.

The perylene-based compound is a compound having a structure in which two oxygen atoms in the six-membered rings of perylenetetracarboxylic dianhydride are removed, and examples thereof include perylene black.

Although the content of one or more compounds selected from the group consisting of an azomethineazo-based compound and a perylene-based compound in the core layer differs depending on the thickness of the core layer, the composition of a design layer described later, etc. and thus cannot be specified definitely, the content is preferably 45% by mass or less and more preferably 5% to 30% by mass based on the total solid content of the core layer.

The core layer may include additives such as an ultraviolet absorber, a light stabilizer, an antioxidant, and a flame-retardant, if needed.

The thickness of the core layer is not particularly limited but it is usually 1 mm or more and is preferably 1 to 10 mm.

Herein, the thickness of each layer (core layer, design layer, etc.) of the resin panel is obtained by calculating the average of values at arbitrary 20 points in observation of a vertical cross-section of the resin panel using an electron microscope or the like.

### <Antireflection layer>

The resin panel of the present invention preferably includes an antireflection layer disposed on at least a surface on one side thereof. The antireflection layer is preferably disposed at least on a surface on the inner layer side of the resin panel and may be disposed on surfaces on both sides of the resin panel. Considering the fact that the outer layer side of the resin panel is required to have excellent scratch resistance, it is also preferable that the antireflection layer be disposed only on a surface of the inner layer side of the resin panel.

Commonly used antireflection layers are designed such that the reflectance at or around 550 nm, which is the center wavelength of the visible region, is lowest. The antireflection layer of the present embodiment is preferably designed such that the reflectance at or around a wavelength of 905 nm is the lowest.

The antireflection layer may have a single layer structure of a low refractive index layer, and a two-layered structure of a high refractive index layer and a low refractive index layer, and the antireflection layer may be composed of three or more layers. In the case of the two-layered structure of a high refractive index layer and a low refractive index layer, the low refractive index layer is disposed on the surface side (that is, the high refractive index layer is disposed on the core layer side).

The total thickness of the antireflection layer may be adjusted according to each configuration (single layer, two layers, three or more layers) of the antireflection layer so that the reflectance at or around a wavelength of 905 nm is the lowest. The total thickness of the antireflection layer is, for example, about 120 to 550 nm and preferably about 170 to 450 nm.

### - Low refractive index layer -

The refractive index of the low refractive index layer is preferably 1.28 to 1.40, more preferably 1.30 to 1.38, and still more preferably 1.32 to 1.37.

The thickness of the low refractive index layer is preferably 120 to 250 nm, more preferably 120 to 200 nm, still more preferably 150 to 200 nm, and even more preferably 160 to 190 nm.

The reflectance at or around a wavelength of 905 nm can be easily made the lowest by setting the refractive index and thickness of the low refractive index layer to fall within the above ranges.

Methods for forming the low refractive index layer can be roughly classified into wet process and dry process. Examples of the wet process include a method involving sol-gel process using a metal alkoxide or the like, a method involving applying a resin with a low refractive index such as a fluororesin, and a method involving applying an application liquid for forming a low refractive index layer that is a resin composition containing low refractive index particles. Examples of the dry process include a method involving physical vapor deposition process or chemical vapor deposition process with selecting particles having a desired refractive index among low refractive index particles described later.

Wet process is excellent in production efficiency, and in wet process, it is preferable that the layer be formed from an application liquid for forming a low refractive index layer that is a binder resin composition containing low refractive index particles.

Any of particles made of an inorganic compound such as silica and magnesium fluoride and particles made of an organic compound can be used as the low refractive index particles without limitation, but particles with structure having voids are preferably used in view of improving antireflection properties by lowering the refractive index.

Particles with structure having voids have fine voids inside thereof, and the voids are filled with gas such as air, which has a refractive index of 1.0, for example; therefore, their own refractive index is lowered. Examples of such particles having voids include inorganic or organic porous particles and hollow particles, and include porous silica, hollow silica particles, and porous polymer particles and hollow polymer particles of an acrylic resin and the like.

The average particle diameter of primary particles of the low refractive index particles is preferably 5 to 200 nm, more preferably 5 to 100 nm, and still more preferably 10 to 80 nm.

The content of the low refractive index particles is preferably 50 to 200 parts by mass and more preferably 70 to 150 parts by mass based on 100 parts by mass of a binder component.

The binder resin composition is preferably a curable resin composition. The curable resin composition is to be a cured product in the antireflection layer and to serve as a binder component.

Examples of the curable resin composition include a thermosetting resin composition and an ionizing radiation-curable resin composition, and an ionizing radiation-curable resin composition is preferable among them.

The thermosetting resin composition is a composition comprising at least a thermosetting resin and is a resin composition cured by heating. Examples of the thermosetting resin include an acrylic resin, a urethane resin, a phenolic resin, a urea-melamine resin, an epoxy resin, an unsaturated polyester resin, and a silicone resin. In the thermosetting resin composition, a curing agent such as an isocyanate-based curing agent is added to these curable resins, if needed.

The ionizing radiation-curable resin composition is a composition comprising a compound having an ionizing radiation-curable functional group (hereinafter, also referred to as an "ionizing radiation-curable compound"). Examples of the ionizing radiation-curable functional group include an ethylenically unsaturated bonding group such as a (meth)acryloyl group, a vinyl group, and an allyl group; an epoxy group; and an oxetanyl group.

The ionizing radiation-curable resin is preferably a compound having an ethylenically unsaturated bonding group. In view of preventing the resin layer from getting scratched during the process of producing a transfer sheet, the ionizing radiation-curable resin is more preferably a compound having two or more ethylenically unsaturated bonding groups, and is still more preferably a polyfunctional (meth)acrylate-based compound having two or more ethylenically unsaturated bonding groups among others. Any of monomers and oligomers can be used as the polyfunctional (meth)acrylate-based compound.

An ionizing radiation means an electromagnetic ray or charged particle radiation having an energy quantum capable of polymerizing or crosslinking molecules, and an ultraviolet ray (UV) or an electron beam (EB) is usually used; however, an electromagnetic ray such as an X-ray and a γ-ray and a charged particle radiation such as an α-ray and an ionic line can also be used.

Among polyfunctional (meth)acrylate-based compounds, examples of two-functional (meth)acrylate-based monomers include ethylene glycol di(meth)acrylate, bisphenol A tetraethoxydiacrylate, bisphenol A tetrapropoxydiacrylate, and 1,6-hexanediol diacrylate.

Examples of trifunctional or higher functional (meth)acrylate-based monomers include trimethylolpropane tri(meth)acrylate, pentaerythritol tri(meth)acrylate, pentaerythritol tetra(meth)acrylate, dipentaerythritol hexa(meth)acrylate, dipentaerythritol tetra(meth)acrylate, and isocyanuric acid-modified tri(meth)acrylate.

The (meth)acrylate-based monomers described above may be a monomer in which a part of the molecular skeleton is modified, and a monomer having been modified with ethylene oxide, propylene oxide, caprolactone, isocyanuric acid, an alkyl, a cyclic alkyl, an aromatic group, a bisphenol, etc. can also be used.

Examples of polyfunctional (meth)acrylate-based oligomers include an acrylate-based polymer such as a urethane (meth)acrylate, an epoxy (meth)acrylate, a polyester (meth)acrylate, and a polyether (meth)acrylate.

A urethane (meth)acrylate is obtained through reaction of a polyhydric alcohol and an organic diisocyanate with a hydroxy(meth)acrylate, for example.

Preferable epoxy (meth)acrylates are a meth(acrylate) obtained by reacting an aromatic epoxy resin, alicyclic epoxy resin, aliphatic epoxy resin, or the like having trifunctionality or higher functionality with (meth)acrylic acid; a meth(acrylate) obtained by reacting an aromatic epoxy resin, alicyclic epoxy resin, aliphatic epoxy resin, or the like having difunctionality or higher functionality with a polybasic acid and (meth)acrylic acid; and a meth(acrylate) obtained by reacting an aromatic epoxy resin, alicyclic epoxy resin, aliphatic epoxy resin, or the like having difunctionality or higher functionality with a phenol and (meth)acrylic acid.

The ionizing radiation-curable resins described above can be used singly or in combinations of two or more kinds thereof.

In the case where the ionizing radiation-curable resin is an ultraviolet curable resin, it is preferable that an application liquid for forming a resin layer include an additive such as a photopolymerization initiator and a photopolymerization accelerator.

Examples of the photopolymerization initiator include one or more selected from the group consisting of acetophenone, benzophenone, α-hydroxyalkylphenone, Michler's ketone, benzoin, benzyldimethylketal, benzoylbenzoate, an α-acyloxime ester, thioxanthones, etc.

The photopolymerization accelerator can reduce polymerization inhibition due to air during curing and accelerate the curing rate, and examples thereof include one or more selected from the group consisting of isoamyl p-dimethylaminobenzoate, ethyl p-dimethylaminobenzoate, etc.

The low refractive index layer preferably includes a water repellent. When the low refractive index layer includes a water repellent, dew condensation inside the resin panel can be prevented, and deterioration of infrared sensor functions due to dew condensation can be prevented.

Examples of the water repellent include a fluorine-based compound. The content of the water repellent is preferably 1% to 30% by mass and more preferably 3% to 20% by mass based on the total solid content of the low refractive index layer.

### - High refractive index layer -

The antireflection layer may further include a high refractive index layer. By virtue of providing a high refractive index layer in addition to the low refractive index layer, the wavelength region with low reflectance is widened, and the applicable range of infrared laser wavelengths can be widened. In addition, the reflectance peak at or around 905 nm can be sharpened, and other wavelength which would otherwise be noise can be cut by increasing the reflectance at other wavelengths.

The high refractive index layer is disposed on the core layer side relative to the low refractive index layer.

The high refractive index layer preferably has a refractive index of 1.55 to 1.85 and more preferably 1.56 to 1.70.

The thickness of the high refractive index layer is preferably 300 nm or less and more preferably 20 to 250 nm.

The high refractive index layer can be formed from an application liquid for high refractive index layer including a binder resin composition high refractive index particles, for example. The curable resin composition exemplified for the low refractive index layer can be used as the binder resin composition, for example.

Examples of the high refractive index particles include antimony pentoxide (1.79), zinc oxide (1.90), titanium oxide (2.3 to 2.7), cerium oxide (1.95), tin-doped indium oxide (1.95 to 2.00), antimony-doped tin oxide (1.75 to 1.85), yttrium oxide (1.87), and zirconium oxide (2.10).

The average particle diameter of primary particles of the high refractive index particles is preferably 5 to 200 nm, more preferably 5 to 100 nm, and still more preferably 10 to 80 nm.

### - Contact angle -

The water contact angle of the surface of the antireflection layer is preferably 100 degrees or more and more preferably 105 degrees or more. When the contact angle falls within said range, dew condensation inside the resin panel can be prevented, and deterioration of infrared sensor functions due to dew condensation can be prevented.

Herein, the "water contact angle" means the static contact angle measured in the following manner: 1.5 µL of pure water is dropped and the static contact angle is measured according to the θ/2 method two seconds after the water droplet has landed.

### <Additional layer 1 (layer located between core layer and antireflection layer)>

The core layer and the antireflection layer may be closely attached to each other directly, but are preferably closely attached to each other via another layer.

Examples of the layer located between the core layer and the antireflection layer include a substrate A, an adhesive layer A, and a hard coat layer A. Additional layers such as a design layer and a primer layer, which are shown as examples of the outer layer, may further be provided between the core layer and the antireflection layer.

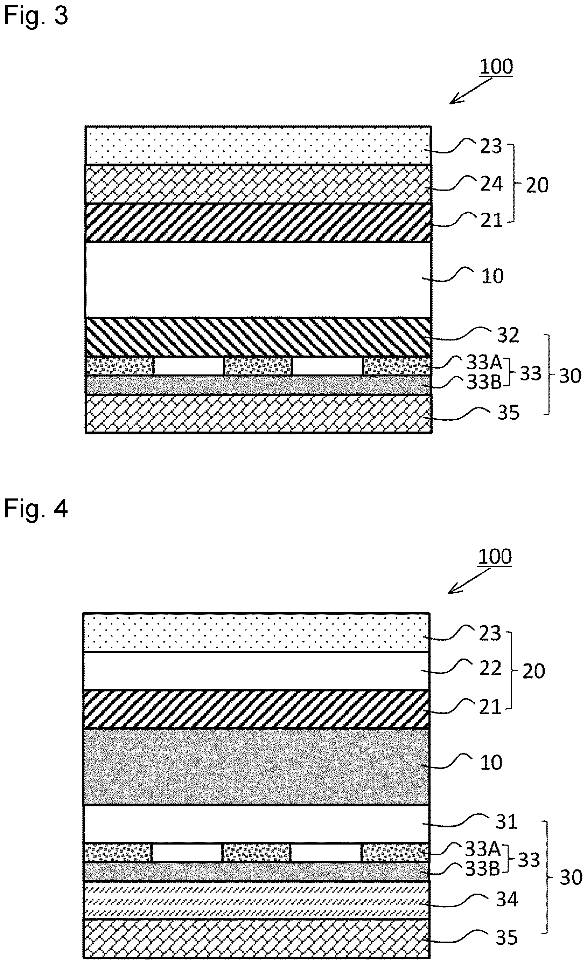

As shown in Fig. 1 and Fig. 4, in the case where the substrate A (22) and the adhesive layer A (21) are provided between the antireflection layer (23) and the core layer (10) (≈ in the case where the adhesive layer A (21) and the substrate A (22) are provided as the inner layer (20)), it is preferable that the inner layer (20) be laminated on the core layer (10), and the core layer and the inner layer be closely attached to each other.

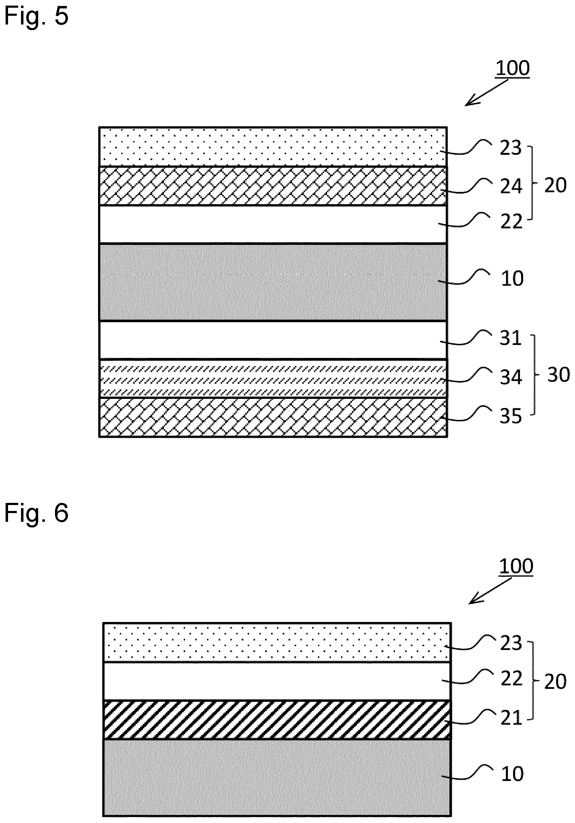

As shown in Fig. 2 and Fig. 5, in the case where the substrate A (22) is provided between the antireflection layer (23) and the core layer (10) (≈ in the case where the substrate A (22) is provided as the inner layer (20) but no adhesive layer A (21) is provided), it is preferable that the core layer (10) and the inner layer (20) be closely attached to each other by insert molding.

As shown in Fig. 3, in the case where the adhesive layer A (21) is provided between the antireflection layer (23) and the core layer (10) (≈ in the case where the adhesive layer A (21) is provided as the inner layer (20) but no substrate A (22) is provided), it is preferable that the core layer (10) and the inner layer (20) be closely attached to each other by in-mold molding using a transfer sheet (a transfer sheet having a transfer layer (inner layer) including an antireflection layer and an adhesive layer A and the like on a release substrate).

### - Substrate A -

Examples of the substrate A include plastic films made of a resin such as a polyolefin-based resin such as polyethylene and polypropylene; a vinyl-based resin such as polyvinyl chloride, polyvinylidene chloride, polyvinyl alcohol, an ethylene-vinyl acetate copolymer, and an ethylene-vinyl alcohol copolymer; a polyester-based resin such as polyethylene terephthalate, polyethylene naphthalate, and polybutylene terephthalate; an acrylic resin such as polymethyl (meth)acrylate and polyethyl (meth)acrylate; a styrene-based resin such as polystyrene; and a polyamide-based resin typified by nylon 6 or nylon 66.

Among these plastic films, a biaxial stretching polyester film is preferable in view of heat resistance and dimension stability, and an acrylic film, a polycarbonate film, or a co-extruded product of an acrylic resin and polycarbonate is preferable in view of moldability for insert molding and the like and weather resistance.

The thickness of the substrate A is preferably 28 to 250 µm and more preferably 38 to 200 µm in view of moldability, handleability, etc.

### - Adhesive layer A -

The adhesive layer A is preferably disposed at the position in contact with the core layer.

The adhesive layer A may be a pressure-sensitive adhesive layer or may be a heat-sensitive adhesive layer (so-called a "heat seal layer"). A pressure-sensitive adhesive layer is preferable for the case where the above-described lamination is carried out, and a heat-sensitive adhesive layer (heat seal layer) is preferable for the case where the above-described in-mold molding is carried out.

A heat-sensitive or pressure-sensitive resin that matches the material for the core layer is preferably used for the adhesive layer A. For example, in the case where the material for the core layer is an acrylic resin, an acrylic resin is preferably used. In the case where the material for the core layer is a polyphenyleneoxide-based resin, a polycarbonate-based resin, or a styrene-based resin, a resin compatible with these resins, such as an acrylic resin, polystyrene-based resin, or a polyamide-based resin, is preferably used. In the case where the material for the core layer is a polypropylene resin, any of a chlorinated polyolefin resin, a chlorinated ethylene-vinyl acetate copolymer resin, cyclized rubber, and a coumarone-indene resin are preferably used.

The thickness of the adhesive layer A is preferably 0.1 to 50 µm and more preferably 0.5 to 30 µm.

### - Hard coat layer A -

The hard coat layer A is preferably disposed on the core layer side relative to the antireflection layer and at the position in contact with the antireflection layer.

By virtue of disposing the hard coat layer A at said position, the surface of the antireflection layer is prevented from getting scratched during producing the resin panel and when incorporating the resin panel into an infrared sensor, and a desired transmittance can be easily kept over a long period. In addition, by virtue of disposing the hard coat layer A at said position, the infrared transmittance can be further enhanced by adjusting the refractive index of the hard coat layer A.

The hard coat layer A preferably includes a cured product of a curable resin composition as a main component.

The main component means a component that accounts for 50% by mass or more, preferably 70% by mass or more, and still more preferably 80% by mass or more of the total solid content of the hard coat layer A.

Examples of the curable resin composition of the hard coat layer A include a thermosetting resin composition and an ionizing radiation-curable resin composition, and an ionizing radiation-curable resin composition is preferable.

Examples of the thermosetting resin composition and the ionizing radiation-curable resin composition of the hard coat layer A include the thermosetting resin composition and the ionizing radiation-curable resin composition as described for the low refractive index layer.

The hard coat layer A may include inorganic particles in order to enhance hardness.

Examples of the inorganic particles include silica, alumina, zirconia, and titania, and silica is preferable.

The average particle diameter of the inorganic particles is preferably 10 nm to 6 µm and more preferably 30 nm to 5 µm.

Herein, the average particle diameter is measured as a mass average value d50 in particle size distribution measurement by a laser light diffraction method.

The content of the inorganic particles in the hard coat layer A is preferably 0.1 to 30 parts by mass and more preferably 1 to 20 parts by mass based on 100 parts by mass of the cured product of the curable resin composition.

The thickness of the hard coat layer A is preferably 1 to 20 µm, more preferably 2 to 10 µm, and still more preferably 3 to 5 µm.

### <Design layer>

The resin panel of the present invention may have a design layer.

In the case where the resin panel has the antireflection layer, the design layer is preferably located between the antireflection layer and the core layer or on the side opposed to the antireflection layer relative to the core layer, and is more preferably located on the side opposed to the antireflection layer relative to the core layer, among others.

That is, in an embodiment in which the antireflection layer and the design layer are provided, it is more preferable that the resin panel include the design layer, the core layer, and the antireflection layer in this order, and that the antireflection layer be disposed on the surface of the resin panel.

The design layer preferably includes a binder resin and a colorant.

Examples of the binder resin of the design layer include a thermoplastic resin, a cured product of a thermosetting resin composition, and a cured product of an ionizing radiation-curable resin composition, and it is preferable that the binder resin be selected, as appropriate, according to the composition of an adjacent layer in view of providing good adhesiveness between the design layer and the adjacent layer (for example, substrate B, primer layer, or hard coat layer B). For example, a thermoplastic resin is preferably included as the binder resin because good adhesiveness with various layers is easily obtained. In the case where an adjacent layer is formed from a thermosetting resin composition, the binder resin of the design layer is preferably formed from a thermosetting resin composition (in the case where the adjacent layer includes a cured product of a thermosetting resin composition, the binder resin of the design layer preferably includes a cured product of a thermosetting resin composition).

Examples of the thermoplastic resin and thermosetting resin composition as the binder resin of the design layer include those described as examples of the thermoplastic resin of the core layer, and those described as examples of the thermosetting resin composition of the low refractive index layer.

The colorant of the design layer is preferably one or more compounds selected from the group consisting of an azomethineazo-based compound and a perylene-based compound in view of keeping the light transmittance at a wavelength of 905 nm in a high transmittance range. That is, the design layer preferably includes one or more compounds selected from the group consisting of an azomethineazo-based compound and a perylene-based compound.

Although the content of the one or more compounds selected from the group consisting of an azomethineazo-based compound and a perylene-based compound in the design layer differs depending on the thickness of the design layer, the composition of the core layer described above, etc. and cannot be specified definitely, the content is preferably 5% to 50% by mass and more preferably 10% to 40% by mass based on the total solid content of the design layer.

The design layer may have a single layer structure but preferably includes a first design layer including halftone dots or mesh, and a second design layer that is wholly solid. By virtue of having said structure, visible light shielding properties are imparted by solid printing on the whole surface of the second design layer while imparting design by the halftone dots or mesh of the first design layer, and design and visible light shielding properties can thus be easily achieved at the same time.

In particular, when the first design layer and the second design layer both include one or more compounds selected from the group consisting of an azomethineazo-based compound and a perylene-based compound, the light transmittance at a wavelength of 905 nm can be easily kept in a high transmittance range while achieving both design and visible light shielding properties.

The diameter of each dot of the halftone dots of the first design layer is preferably 5 to 100 µm, and the distance between centers of the halftone dots is preferably 20 to 200 µm.

The line width of the mesh of the first design layer is preferably 20 to 100 µm, and the distance between centers of the lines is preferably 20 to 200 µm.

The thickness of the design layer (when the design layer includes the first design layer and the second design layer, the total thickness of the first design layer and the second design layer) is preferably 0.5 to 10 µm, more preferably 1 to 7 µm, and still more preferably 3 to 5 µm.

When the design layer includes the first design layer and the second design layer, the ratio between the thickness of the first design layer and the thickness of the second design layer is preferably 2:8 to 8:2 and more preferably 4:6 to 6:4.

### <Additional layer 2 (layer located on side opposed to antireflection layer relative to core layer)>

As described above, the design layer is preferably located on the side opposed to the antireflection layer relative to the core layer. A layer other than the design layer may be provided on the side opposed to the antireflection layer relative to the core layer. An additional layer may be provided without providing the design layer on the side opposed to the antireflection layer relative to the core layer (for example, Figs. 2 and 5). The side opposed to the antireflection layer relative to the core layer may be exposed without providing any layers (for example, Fig. 6).

Examples of the layer other than the design layer located on the side opposed to the antireflection layer relative to the core layer include a substrate B, an adhesive layer B, a primer layer, and a hard coat layer B.

As shown in Fig. 4 and Fig. 5, when a substrate B (31) is provided on the side opposed to the antireflection layer relative to the core layer 10 (≈ when the substrate B (31) is provided as the outer layer (30) but no adhesive layer B is provided), it is preferable that the core layer (10) and the outer layer (30) be closely attached to each other by insert molding.

As shown in Fig. 1 to Fig. 3, when an adhesive layer B (32) is provided on the side opposed to the antireflection layer relative to the core layer 10 (≈ when the adhesive layer B (32) is provided as the outer layer (30) but no substrate B (31) is provided), it is preferable that the core layer (10) and the outer layer (30) be closely attached to each other by in-mold molding using a transfer sheet (a transfer sheet having a transfer layer (outer layer) including an adhesive layer B and the like on a release substrate), and the release substrate be peeled thereafter.

Although not showing in the figures, when the adhesive layer B and the substrate B are provided on the side opposed to the antireflection layer relative to the core layer (≈ when the adhesive layer B and the substrate B are provided as the outer layer), it is preferable that the outer layer be laminated on the core layer, and the core layer and the outer layer be closely attached to each other.

### - Substrate B -

Examples of the substrate B include plastic films described as examples for the substrate A.

Among these plastic films, a biaxial stretching polyester film is preferable in view of heat resistance and dimension stability, and an acrylic film, a polycarbonate film, or a co-extruded film of an acrylic resin and polycarbonate is preferable in view of moldability for insert molding and the like and weather resistance.

The thickness of the substrate B is preferably 28 to 300 µm and more preferably 75 to 250 µm in view of moldability, handleability, resistance to stepping stone, etc.

### - Adhesive layer B -

The adhesive layer B may be a pressure-sensitive adhesive layer or may be a heat-sensitive adhesive layer (so-called a "heat seal layer"). A pressure-sensitive adhesive layer is preferable for the case where the above-described lamination is carried out, and a heat-sensitive adhesive layer (heat seal layer) is preferable for the case where the above-described in-mold molding is carried out.

A heat-sensitive or pressure-sensitive resin that matches the material for the core layer is preferably used for the adhesive layer B. Preferable mode of the adhesive layer B matching the material of the core layer are the same as described for the preferable mode for the adhesive layer A.

The thickness of the adhesive layer B is preferably 0.1 to 50 µm and more preferably 0.5 to 30 µm.

### - Hard coat layer B -

The hard coat layer B is preferably disposed on the outermost surface of the layer located on the side opposed to the antireflection layer relative to the core layer. That is, the hard coat layer B is preferably disposed on the surface side of the outer layer (the side furthest from the core layer, of the outer layer). When the hard coat layer B is located at said position, scratch resistance of the resin panel is improved, and the function of an infrared sensor can be easily kept over a long period.

The hard coat layer B preferably includes a cured product of a curable resin composition as a main component.

The main component means a component that accounts for 50% by mass or more, preferably 70% by mass or more, and still more preferably 80% by mass or more of the total solid content of the hard coat layer B.

Examples of the curable resin composition of the hard coat layer B include a thermosetting resin composition and an ionizing radiation-curable resin composition, and an ionizing radiation-curable resin composition is preferable.

Examples of the thermosetting resin composition and the ionizing radiation-curable resin composition of the hard coat layer B include the thermosetting resin composition and the ionizing radiation-curable resin composition as described for the low refractive index layer.

The hard coat layer B may include inorganic particles in order to enhance hardness.

Modes of the inorganic particles of the hard coat layer B (particle type, average particle diameter, content) are the same as described for the mode of the inorganic particles of the hard coat layer A.

As the hard coat layer B is located on the outer side, the hard coat layer B preferably includes a weatherproofing agent.

Examples of the weatherproofing agent include ultraviolet absorbers and photostabilizers generally used. The content of the weatherproofing agent is preferably 0.1 to 15 parts by mass and more preferably 0.5 to 10 parts by mass based on 100 parts by mass of the cured product of the curable resin composition.

The thickness of the hard coat layer B is preferably 1 to 20 µm, more preferably 2 to 10 µm, and still more preferably 3 to 5 µm.

### - Primer layer -

The primer layer is a layer disposed between layers, if needed, in order to enhance interlayer adhesiveness. The position of the primer layer is not particularly limited, and the primer layer can be disposed between the hard coat layer B and the design layer, for example.

The primer layer preferably includes a resin component as a main component.

Examples of the resin component of the primer layer include a thermoplastic resin and a cured product of a curable resin composition. A cured product of a curable resin composition is preferable, and a cured product of a thermosetting resin composition is more preferable.

Examples of the thermosetting resin composition used as the resin component of the primer include those described as the examples of the thermosetting resin composition for the low refractive index layer.

The thickness of the primer layer is preferably 1 to 20 µm, more preferably 2 to 10 µm, and still more preferably 3 to 5 µm.

### - ATO (antimony tin oxide), ITO (indium tin oxide) -

Any layer in the outer layer of the resin panel of the present invention may include one or more infrared absorbers selected from the group consisting of ATO and ITO.

ATO and ITO transmit light having a wavelength of 905 nm at a given ratio while having the property of mostly absorbing near infrared light having wavelengths exceeding 905 nm. Therefore, when any layer in the outer layer includes one or more infrared absorbers selected from the group consisting of ATO and ITO, increase in temperature inside an infrared sensor is prevented by cutting near infrared light having wavelengths exceeding 905 nm, while the light transmittance at a wavelength of 905 nm is kept at a high level, and the infrared sensor can fully perform its function in an easier manner.

The one or more infrared absorbers selected from the group consisting of ATO and ITO are preferably included in any one or more layers selected from the group consisting of the adhesive layer B, the hard coat layer B, and the primer layer.

The content of the one or more infrared absorbers selected from the group consisting of ATO and ITO may be adjusted as appropriate within a range in which the light transmittance at a wavelength of 905 nm of the resin panel can be kept at 85% or more.

In the case where cesium tungsten oxide and lanthanum hexaboride, which are representative examples of infrared absorbers, are used, it is difficult to keep the light transmittance at a wavelength of 905 nm at a high level.

### [Method for producing resin panel]

The resin panel of the present invention can be produced by lamination, insert molding, in-mold molding, etc.

Production examples for the resin panels of Fig. 1 to Fig. 6 will be explained hereinafter.

### <Production example for resin panel of Fig. 1>

The resin panel of Fig. 1 can be produced by a process including 1-1 to 1-5 below, for example.
1-1. A step of providing a laminate film for forming an inner layer (20) including an adhesive layer A (21), a substrate A (22), a hard coat layer A (24), and an antireflection layer (23) in this order.
1-2. A step of providing a transfer sheet B for in-mold molding for forming an outer layer (B) including a release substrate B (not shown), a hard coat layer B (35), a design layer (33), and an adhesive layer B (32) in this order.
1-3. A step of disposing the transfer sheet B from step 1-2 within a mold for in-mold molding (the transfer sheet B is disposed within the mold so that the adhesive layer B (32) faces the inner side of the mold); and subsequently injecting a composition for forming a core layer to obtain a laminated body in which a core layer (10) and the adhesive layer B (32) of the transfer sheet B are closely attached to each other.
1-4. A step of peeling the release substrate B from the laminated body obtained in step 1-3.
1-5. A step of bonding the adhesive layer A (21) side of the laminate film from step 1-1 to the core layer (10)-exposed side of the laminated body obtained in step 1-3 or of the laminated body from which the release substrate B has been peeled in step 1-4.

### <Production example for resin panel of Fig. 2>

The resin panel of Fig. 2 can be produced by a process including 2-1 to 2-5 below, for example.
2-1. A step of providing a film A for insert molding for forming an inner layer (20) including a substrate A (22), a hard coat layer A (24), and an antireflection layer (23) in this order.
2-2. A step of providing a transfer sheet B for in-mold molding for forming an outer layer (30) including a release substrate B (not shown), a hard coat layer B (35), and an adhesive layer B (32) in this order.
2-3. A step of disposing the film A for insert molding from step 2-1 within a vacuum molding mold, followed by vacuum molding (offline preliminary molding), and optionally trimming an unnecessary part to obtain a molded sheet A.
2-4. A step of disposing the molded sheet A obtained in step 2-3 within one of a pair of molds for injection molding (insert and in-mold batch-molding) while disposing the transfer sheet B from step 2-2 within the other of the molds, and subsequently injecting a composition for forming a core layer to obtain a laminated body in which the substrate A (22) of the molded sheet A, a core layer (10), and the adhesive layer B (32) of the transfer sheet B are closely attached to one another.
2-5. A step of peeling the release substrate B from the laminated body obtained in step 2-4.

### <Production example for resin panel of Fig. 3>

The resin panel of Fig. 3 can be produced by a process including 3-1 to 3-4 below, for example.
3-1. A step of providing a transfer sheet A for in-mold molding for forming an inner layer (20) including a release substrate A (not shown), an antireflection layer (23), a hard coat layer A (24), and an adhesive layer A (21) in this order.
3-2. A step of providing a transfer sheet B for in-mold molding for forming an outer layer (30) including a release substrate B (not shown), a hard coat layer B (35), a design layer (33), and an adhesive layer B (32) in this order.
3-3. A step of disposing the transfer sheet A from step 3-1 within one of a pair of molds for in-mold molding while disposing the transfer sheet B from step 3-2 within the other of the molds (the transfer sheet A and the transfer sheet B are disposed within the molds such that each of the adhesive layer A (21) and the adhesive layer B (32) faces the inner side of the mold, and the adhesive layer A and the adhesive layer B face each other), and subsequently injecting a composition for forming a core layer to obtain a laminated body in which the adhesive layer A (21) of the transfer sheet A, a core layer (10), and the adhesive layer B (32) of the transfer sheet B are closely attached to one another.
3-4. A step of opening the molds and peeling the release substrate A and the release substrate B from the laminated body obtained in step 3-3.

### <Production example for resin panel of Fig. 4>

The resin panel of Fig. 4 can be produced by a process including 4-1 to 4-5 below, for example.
4-1. A step of providing a laminate film for forming an inner layer (20) including an adhesive layer A (21), a substrate A (22), and an antireflection layer (23) in this order.
4-2. A step of providing a film for insert molding for forming an outer layer (30) including a substrate B (31), a design layer (33), a primer layer (34), and a hard coat layer B (35) in this order.
4-3. A step of disposing the film for insert molding from step 4-2 within a vacuum molding mold, followed by vacuum molding (offline preliminary molding), and optionally trimming an unnecessary part to obtain a molded sheet.
4-4. A step of inserting the molded sheet obtained in step 4-3 into an injection molding mold, and injecting a composition for forming a core layer to obtain a laminated body in which a core layer (10) and the molding sheet (outer layer) are closely attached to each other.
4-5. A step of bonding the adhesive layer A (21) side of the laminate film from step 4-1 to the core layer-exposed side of the laminated body obtained in step 4-4.

### <Production example for resin panel of Fig. 5>

The resin panel of Fig. 5 can be produced by a process including 5-1 to 5-5 below, for example.
5-1. A step of providing a film A for insert molding for forming an inner layer (20) including a substrate A (22), a hard coat layer A (24), and an antireflection layer (23) in this order.
5-2. A step of providing a film B for insert molding for forming an outer layer (30) including a substrate B (31), a primer layer (34), and a hard coat layer B (35) in this order.
5-3. A step of disposing the film A for insert molding from step 5-1 within a vacuum molding mold, followed by vacuum molding (offline preliminary molding), and optionally trimming an unnecessary part to obtain a molded sheet A.
5-4. A step of disposing the film B for insert molding from step 5-2 within a vacuum molding mold, followed by vacuum molding (offline preliminary molding), and optionally trimming an unnecessary part to obtain a molded sheet B.
5-5. A step of disposing the molded sheet A obtained in step 5-3 within one of a pair of molds for insert molding while disposing the molded sheet B obtained in step 5-4 within the other of the molds, and subsequently injecting a composition for forming a core layer to obtain a laminated body in which the molding sheet A (inner layer), a core layer (10), and the molding sheet B (outer layer) are closely attached to one another.

### <Production example for resin panel of Fig. 6>

The resin panel of Fig. 6 can be produced by a process including 6-1 to 6-3 below, for example.
6-1. A step of providing a laminate film for forming an inner layer (20) including an adhesive layer A (21), a substrate A (22), and an antireflection layer (23) in this order.
6-2. A step of providing a core layer (10) already molded.
6-3. A step of bonding the adhesive layer A (21) side of the laminate film from step 6-1 to the core layer.

### [Infrared sensor]

An infrared sensor of the present invention comprises an infrared light emitting element, an infrared light receiving element, and a protective cover disposed in front of the infrared light emitting element and infrared light receiving element, in which the protective cover is the above-described resin panel of the present invention.

Any infrared light emitting elements emitting an infrared laser can be used without particular limitation. The wavelength of the infrared laser is preferably 905 nm.

Any infrared light receiving elements capable of receiving the infrared laser can be used without particular limitation.

The infrared light emitting element and the infrared light receiving element are preferably disposed in a casing.

It is preferable that the casing have a window part, and that infrared light be able to be emitted and received through the window part. The window part is preferably provided with a protective cover.

The protective cover is disposed in front of the infrared light emitting element and infrared light receiving element. The infrared sensor of the present invention is required to use the above-described resin panel of the present invention as the protective cover.

By virtue of using the above-described resin panel of the present invention as the protective cover, the infrared sensor is less likely to malfunction, and the infrared sensor can fully function.

In the case where the resin panel includes an antireflection layer, the resin panel is preferably disposed so that the side provided with the antireflection layer faces the infrared light emitting element and infrared light receiving element side.

The infrared sensor is useful as a distance sensor (LiDAR) and can be used as a sensor for automobile driving, for example.

### Examples

Hereinafter, the present invention will be specifically described with reference to Examples and Comparative Examples. However, the present invention is not limited to modes described in Examples.

### 1. Measurement and evaluation

The following measurement and evaluation were carried out on resin panels obtained in Examples and Comparative Examples. Results are shown in Table 1.

### 1-1. Transmittance

The light transmittance (infrared transmittance) at a wavelength of 905 nm and visible light transmittance of resin panels were measured using an ultraviolet-visible spectrophotometer with the following function and specification. With respect to Examples 1 to 4 and Comparative Example 3, measurement was carried out for both of the case where the inner surface (the surface on which an antireflection layer was provided) was the light incident surface and the case where the outer surface was the light incident surface.

### <Function and specification>

Model; ultraviolet-visible spectrophotometer manufactured by JASCO Corporation (model number: V-670)
Attachment unit; integrating sphere unit (manufactured by JASCO Corporation, item number: ISN-723)
Light source; deuterium lamp (190 to 350 nm), halogen lamp (330 to 2700 nm)
Wavelength interval in measurement; 1 nm
Spot diameter in measurement; 2 to 20 nm

### 1-2. Scratch resistance

Steel wool ("Bonster #0000," manufactured by Nippon Steel Wool Co., Ltd.) was moved back and forth 100 times on the outer surface (the surface on the other side than the side provided with antireflection layer) of the resin panels of Examples 1 to 4 and Comparative Example 1 and on the core layer-exposed surfaces of the resin panels of Comparative Examples 1 and 2, with a load of 100 g/m₂ applied thereon, and the conditions of the surfaces were visually observed. Twenty examinees evaluated the resin panels according to the following scale. Three points were given to a resin panel on which no scratch or almost no change in gloss was observed; two points were given to a resin panel on which minor scratches and minor change in gloss were observed; and one point were given to a resin panel on which scratches were observed and significant change in gloss was observed. The average scores of evaluation by twenty examinees were calculated, and the resin panels were ranked according to the following criteria.

### <Scratch resistance evaluation criteria>

A: Average score is 2.5 or more
B: Average score is 2.0 or more and less than 2.5
C: Average score is less than 2.0

### 2. Preparation of application liquid

The following application liquids were prepared. The "part(s)" and "%" are by mass.

### <Application liquid for hard coat layer 1>

Urethane acrylate-based ultraviolet curable resin composition: 100 parts
   (solid content: 35%, toluene/ethyl acetate mixed solvent)
Photopolymerization initiator: 1.5 parts
   (IGM Resins B.V., trade name "Omnirad 184")

### <Application liquid for hard coat layer 2 (electron radiation curing type)>

Urethane acrylate-based ultraviolet curable resin composition: 100 parts
   (solid content: 35%, toluene/ethyl acetate mixed solvent)
Silica particles: 5 parts
   (average particle diameter: 3 µm)
Weatherproofing agent: 3 parts
   (manufactured by BASF SE, item number: Tinuvin 479)

### <Laminated body for forming adhesive layer 1>

Provided was a laminated body having a transparent pressure-sensitive adhesive layer with a thickness of 25 µm and separators on both sides of the transparent pressure-sensitive adhesive layer (manufactured by PANAC CO., LTD., trade name: PANACLEAN PD-S1).

### < Application liquid for adhesive layer (heat seal layer) 2>

Acrylic resin: 100 parts
   (trade name "TM-R600(NT)K3," manufactured by Dainichiseika Color & Chemicals Mfg. Co., Ltd., solid content: 20%)
Diluent solvent: appropriate amount
   (methyl ethyl ketone, toluene)

### <Application liquid for low refractive index layer 1>

Ultraviolet curable compound: 1.0 parts
   (tri- to tetra-functional alkoxylated pentaerythritol acrylate, manufactured by Nippon Kayaku Co., Ltd., trade name: "PET-30")
Photopolymerization initiator: 0.07 parts
   (IGM Resins B.V., trade name: "Omnirad 127")
Hollow silica: 1.1 parts
   (average particle diameter: 60 nm)
Fluorine-based antifouling agent: 0.1 parts (active ingredient: 0.005 parts by mass)
   (manufactured by Shin-Etsu Chemical Co., Ltd., trade name: "X-71-1203M")
Diluent solvent: appropriate amount

### < Application liquid for design layer 1 (used in common by first design layer and second design layer)>

Binder resin: 100 parts by mass
   (acrylic urethane-based resin)
Azomethineazo-based compound: 20 parts by mass
   (black pigment, manufactured by Dainichiseika Color & Chemicals Mfg. Co., Ltd., trade name: CHROMOFINE BLACK A1103)
Diluent solvent: appropriate amount

### < Application liquid for design layer 2 (used in common by first design layer and second design layer)>

Binder resin: 100 parts by mass
   (acrylic urethane-based resin)
Azomethineazo-based compound: 40 parts by mass
   (black pigment, manufactured by Dainichiseika Color & Chemicals Mfg. Co., Ltd., trade name: CHROMOFINE BLACK A1103)
Diluent solvent: appropriate amount

### <Application liquid for primer layer 1>

Acrylic polyol: 100 parts
   (manufactured by Dainichiseika Color & Chemicals Mfg. Co., Ltd., trade name: TM-VMAC)
Isocyanate-based compound: 1 part
   (manufactured by Dainichiseika Color & Chemicals Mfg. Co., Ltd., trade name: RC-3 curing agent)
Diluent solvent: appropriate amount

### 3. Preparation of material for molding

### 3-1. Laminate film

Application liquid for hard coat 1 was applied onto a polyethylenetelephthalate film having a thickness of 50 µm, dried, and irradiated with ultraviolet light so that the thickness thereof after drying was 4 µm to form a hard coat layer A. Application liquid for low refractive index layer 1 was applied onto the hard coat layer A, dried, and irradiated with ultraviolet light so that the thickness thereof after drying was 175 nm to form an antireflection layer, which was a single layer of a low refractive index layer. Thereafter, one separator of the laminated body 1 was peeled and the laminated body 1 was bonded to the surface on the other side than the hard coat layer of the polyethylenetelephthalate film, and the other separator of the laminated body 1 was subsequently peeled to obtain a laminate film including an adhesive layer A, a substrate A (polyethylenetelephthalate film), a hard coat layer A, and an antireflection layer (single layer of a low refractive index layer) in this order.

The refractive index of the low refractive index layer from the application liquid for low refractive index layer, 1 was 1.36.

### 3-2. Film for insert molding

A film for insert molding was obtained in the same manner as in 3-1, except that the polyethylenetelephthalate film having a thickness of 50 µm was changed to an acrylic film having a thickness of 125 µm, and that no adhesive layer A was formed. The film for insert molding includes a substrate A (acrylic film), a hard coat layer A, and an antireflection layer (single layer of a low refractive index layer) in this order.

### 3-3. Transfer sheet 1 for in-mold molding

Application liquid for low refractive index layer 1 was applied onto a polyethylenetelephthalate film having mold releasability and having a thickness of 50 µm (release substrate A), dried, and irradiated with ultraviolet light so that the thickness thereof after drying was 175 nm to form an antireflection layer, which was a single layer of a low refractive index layer. Thereafter, application liquid for hard coat 1 was applied onto the low refractive index layer, dried, and irradiated with ultraviolet light so that the thickness thereof after drying was 4 µm to form a hard coat layer A. Thereafter, application liquid for adhesive layer (heat seal layer) 2 was applied onto the hard coat layer A and dried so that the thickness thereof after drying was 2 µm to form an adhesive layer A having heat seal properties. Thus, a transfer sheet 1 for in-mold molding was obtained.

The transfer sheet 1 includes the release substrate A, the antireflection layer (single layer of the antireflection layer), the hard coat layer A, and the adhesive layer A (heat seal layer) in this order.

### 3-4. Transfer sheet 2 for in-mold molding

Application liquid for hard coat 2 was applied onto a polyethylenetelephthalate film having mold releasability and having a thickness of 50 µm (release substrate B), dried, and irradiated with an electron beam so that the thickness thereof after drying was 4 µm to form a hard coat layer B. Thereafter, application liquid for design layer 1 was applied onto the hard coat layer B to form halftone dots (halftone dot diameter: 30 µm, distance between centers of halftone dots: 70 µm) and dried to form a first design layer having a thickness of 2 µm. Thereafter, application liquid for design layer 1 was solidly applied onto the first design layer and dried to form a second design layer having a thickness of 2 µm. Thereafter, application liquid for adhesive layer (heat seal layer) 2 was applied onto the second design layer so that the thickness thereof after drying was 2 µm, and dried to form an adhesive layer B having heat seal properties. Thus, a transfer sheet 2 for in-mold molding was obtained.

The transfer sheet 2 includes the release substrate B, the hard coat layer B, the design layer, and the adhesive layer B (heat seal layer) in this order.

### 3-5. Transfer sheet 3 for in-mold molding

A transfer sheet 3 for in-mold molding was obtained in the same manner as in 3-4 except that no design layer was formed. The transfer sheet 3 includes the release substrate B, the hard coat layer B, and the adhesive layer B (heat seal layer) in this order.

### 3-6. Transfer sheet 4 for in-mold molding

A transfer sheet 4 for in-mold molding was obtained in the same manner as in 3-4, except that application liquid for design layer 1 was changed to application liquid for design layer 2, and that the thickness of the first design layer and second design layer was changed from 2 µm to 3 µm. The transfer sheet 4 includes the release substrate B, the hard coat layer B, the design layer, and the adhesive layer B (heat seal layer) in this order.

### 4. Preparation of resin panel

### [Example 1]

The transfer sheet 2 from 3-4 was disposed within a mold for in-mold molding (the transfer sheet 2 was disposed within the mold such that the adhesive layer B faced the inner side of the mold).

Thereafter, the mold was clamped, and a composition (composition including 30 parts by mass of an azomethineazo-based compound based on 100 parts by mass of polycarbonate resin; trade name of "Makrolon AX2675ST, color number: 978001" manufactured by Covestro AG) for forming a core layer was injected into the mold to obtain a laminated body in which a core layer (thickness: 4.0 mm) and the adhesive layer B side of the transfer sheet 2 were closely attached to each other.

Thereafter, the release substrate B was peeled from the laminated body.

Thereafter, the adhesive layer A side of the laminated film of 3-1 above was bonded to the surface on the core layer-exposed side of the laminated body to obtain a resin panel of Example 1. The resin panel of Example 1 has the layer structure shown in Fig. 1.

### [Example 2]

The film for insert molding from 2-1 was disposed within a mold for vacuum molding, followed by vacuum molding (offline preliminary molding), and the unnecessary part was trimmed to obtain a molded sheet 1.

Thereafter, the molded sheet 1 was disposed within one of a pair of molds for injection molding (insert and in-mold batch-molding), and the transfer sheet 3 from 3-5 was disposed within the other of the molds (the transfer sheet 3 was disposed within the mold such that the adhesive layer B faced the inner side of the mold).

Thereafter, the mold was clamped, and a composition (composition including 30 parts by mass of an azomethineazo-based compound based on 100 parts by mass of polycarbonate resin; trade name of "Makrolon AX2675ST, color number: 978001" manufactured by Covestro AG) for forming a core layer was injected into the molds to obtain a laminated body in which the adhesive layer A of the molded sheet 1, a core layer (thickness: 4.0 mm), and the adhesive layer B of the transfer sheet 3 were closely attached to one another.

Thereafter, the release substrate B was peeled from the laminated body to obtain a resin panel of Example 2. The resin panel of Example 2 has the layer structure shown in Fig. 2.

### [Example 3]

The transfer sheet 1 from 3-3 was disposed within one of a pair of upper and lower molds for in-mold molding, and the transfer sheet 4 from 3-6 was disposed within the other of the molds (the transfer sheet 1 and the transfer sheet 4 were disposed within the molds such that each of the adhesive layer A and the adhesive layer B faced the inner side of the mold, and such that the adhesive layer A and the adhesive layer B faced each other).

Thereafter, the molds were clamped, and a composition (transparent polycarbonate resin) for forming a core layer was injected into the molds to obtain a laminated body in which the adhesive layer A of the transfer sheet 1, a core layer (transparent core layer, thickness: 4.0 mm), and the adhesive layer B of the transfer sheet 4 were closely attached to one another.

Thereafter, the release substrate A and the release substrate B were peeled from the laminated body to obtain a resin panel of Example 3. The resin panel of Example 3 has the layer structure shown in Fig. 3.

### [Example 4]

A core layer was prepared by forming a composition including 30 parts by mass of an azomethineazo-based compound based on 100 parts by mass of polycarbonate resin (trade name of "Makrolon AX2675ST, color number: 978001" manufactured by Covestro AG) into a plate-like shape having a thickness of 4.0 mm.

The adhesive layer A side of the laminate film from 3-1 was bonded to the core layer to obtain a resin panel of Example 4. The resin panel of Example 4 has the layer structure shown in Fig. 6.

### [Comparative Example 1]

A product obtained by forming a composition (trade name of "Makrolon AX2675ST, color number: 978001" manufactured by Covestro AG) including 30 parts by mass of an azomethineazo-based compound based on 100 parts by mass of polycarbonate resin into a plate-like shape having a thickness of 4.0 mm was provided as a resin panel of Comparative Example 1.

### [Comparative Example 2]

A transparent polycarbonate resin plate having a thickness of 4.0 mm was provided as a resin panel of Comparative Example 2.

### [Comparative Example 3]

A resin panel of Comparative Example 3 was obtained in the same manner as in Example 2 except that no azomethineazo-based compound was included in the composition for forming a core layer. The resin panel of Comparative Example 3 is the same as the resin panel of Example 2 except that the core layer includes no azomethineazo-based compound and is transparent.

**Table 1**

| | | Examples | | | | Comparative Examples | | |
|---|---|---|---|---|---|---|---|---|
| | | 1 | 2 | 3 | 4 | 1 | 2 | 3 |
| Outer layer | Presence/absence Presence | | Presence | Presence | Absence | Absence | Absence | Presence |
| | Presence or absence of design layer Presence | | Absence | Presence | Absence | Absence | Absence | Absence |
| Inner layer | Presence/absence | Presence | Presence | Presence | Presence | Absence | Absence | Presence |
| | Presence or absence of antireflection layer | Presence | Presence | Presence | Presence | Absence | Absence | Presence |
| Core layer | Presence or absence of azomethineazo-based compound | Presence | Presence | Absence | Presence | Presence | Absence | Absence |
| Infrared light transmittance (%) | | 90 | 93 | 93 | 93 | 80 | 80 | 93 |
| | | 90 | 93 | 93 | 93 | | | 93 |
| Visible light transmittance (%) | | 3 | 10 | 5 | 10 | 10 | 80 | 85 |
| | | 3 | 10 | 5 | 10 | | | 85 |
| Scratch resistance | | A | A | A | B | B | B | A |

| | | | | | | | | |
|---|---|---|---|---|---|---|---|---|
| Note: The infrared light transmittance and visible light transmittance for Examples 1 to 4 and Comparative Example 3: values in the upper row were obtained when the outer side was the light incident surface, and values in the lower row were obtained when the inner side (side provided with the antireflection layer) was the light incident surface. | | | | | | | | |

As is clear from Table 1, it has been confirmed that the resin panels of Examples can suppress visible light transmittance to low levels and can keep infrared light transmittance at high levels, and that, when the resin panels are applied as protective covers to infrared sensors, they enable the infrared sensors to fully function.

### Reference Signs List

10: Core layer
20: Inner layer
21: Adhesive layer A
22: Substrate A
23: Antireflection layer
24: Hard coat layer A
30: Outer layer
31: Substrate B
32: Adhesive layer B
33: Design layer
33A: First design layer
33B: Second design layer
34: Primer layer
35: Hard coat layer B
100: Resin panel

## Claims

1. A resin panel comprising at least a core layer, the resin panel having a light transmittance at a wavelength of 905 nm of 85% or more and a visible light transmittance of 20% or less.

2. The resin panel according to claim 1, wherein the core layer comprises a polycarbonate resin.

3. The resin panel according to claim 1 or 2, wherein the core layer comprises one or more compounds selected from the group consisting of an azomethineazo-based compound and a perylene-based compound.

4. The resin panel according to any one of claims 1 to 3, comprising an antireflection layer disposed on at least a surface on one side thereof.

5. The resin panel according to claim 4, wherein the antireflection layer comprises a low refractive index layer on a surface side, and the low refractive index layer has a refractive index of 1.28 to 1.40 and a thickness of 120 to 250 nm.

6. The resin panel according to any one of claims 1 to 5, comprising a design layer.

7. The resin panel according to claim 6, comprising the design layer, the core layer, and the antireflection layer in this order, wherein the antireflection layer is disposed on a surface of the resin panel.

8. The resin panel according to claim 6 or 7, comprising, as the design layer, a first design layer including halftone dots or mesh, and a second design layer that is wholly solid.

9. The resin panel according to any one of claims 6 to 8, wherein the design layer comprises one or more compounds selected from the group consisting of an azomethineazo-based compound and a perylene-based compound.

10. An infrared sensor comprising: an infrared light emitting element; an infrared light receiving element; and a protective cover disposed in front of the infrared light emitting element and the infrared light receiving element, wherein the protective cover is the resin panel according to any one of claims 1 to 9.
